# EUROPEAN PATENT APPLICATION

(11) **EP 1 978 664 A1**
(43) Date of publication of application: **08.10.2008**
(21) Application number: 07290418.8
(22) Date of filing: 05.04.2007
(51) Int. Cl.: H04L 1/00

(54) **Transmitting data packets over an air interface**

(71) Applicant: Alcatel Lucent, 75008 Paris (FR)
(72) Inventor: Kumar, Vinod, 75005 Paris (FR); Leprovost, Yann, 91620 Nozay (FR); Marin, Cedric, 91310 Montlhery (FR)
(74) Representative: Richardt, Markus Albert

(57) **Abstract**

A method of transmitting data packets over an air interface is disclosed. At least a first and second stream of data packets are multiplexed, wherein a multiplexed stream of data packets is generated. The multiplexed stream of data packets is processed by a forward error correction function, wherein the forward error correction function adds redundancy bits to the multiplexed stream of data packets, wherein a third stream of data packets is generated, and wherein the redundancy bits are used for an error control to be performed on the third stream of data packets. The third stream of data packets is then transmitted over the air interface.

## Description

### Field of the invention

The invention relates to a method of transmitting data packets over an air interface in general and to a method of transmitting data packets of compressed voice data in particular. The invention also relates to a computer program product and to a hardware component that are adapted to perform the method in accordance with the invention, to a terminal, to a base station, and to a radio communication network.

### Background and related art

In telecommunication, forward error correction (FEC) is employed in order to perform error control on data packets sent by a sender over a noisy channel to a receiver. The sender adds redundant data bits to the data packages which allow the receiver to detect and correct errors within some bound without the need to ask the sender for additional data. The advantage of forward error correction is that retransmission of data can often be avoided.

Components or modules for the forward error correction module are typically located in the first stage of digital processing after the signal has been received by the receiver or in the last stage of digital processing before the corresponding signal is transmitted by the sender.

Forward error correction is accomplished by adding redundancy bits to the data packets that are to be transmitted using a predetermined error correction code such as the low-density parity-check code (LDPC code). Each redundant bit is invariably a complex function of many original data bits comprised in the data packets.

While LDPC and other error correcting codes cannot guarantee perfect transmission, the probability of lost information can be made as small as desired. LDPC uses a sparse parity-check matrix, similar to those used for decoding Hamming codes. This sparse matrix is randomly generated and subject to the parity constraints. Decoding them is an NP-complete problem, but there are good approximate decoders.

LDPC and other error correcting codes require however relative long data packet lengths that are encoded or decoded. This has the disadvantage that there might occur delays in the transmission of a sequence of data packets encoded and decoded by LDPC. This is in particular a problem, when the transmitted data relates to compressed voice data as the receiver might suffer from low quality of the transmitted voice. The increased transmission delay due to the forward error correction can thus adversely affect the end-to-end speech quality.

There is therefore a need for an improved method of transmitting data packets over an air interface, when forward error correction is applied to the data packets. Correspondingly there is a need for an improved mobile terminal that is adapted to perform the method in accordance with the invention. There is also a need for an improved base station adapted to perform the method in accordance with the invention.

### Summary of the invention

According to a first aspect of the invention, there is provided a method of transmitting data packets over an air interface. In accordance with an embodiment of the invention, at least a first and second stream of data packets are multiplexed, wherein a multiplexed stream of data packets is generated. The multiplexed stream of data packets is processed by a forward error correction function, wherein the forward error correction function adds redundancy bits to the multiplexed stream of data packets. A third stream of data packets is generated from processing the multiplexed stream of data packets via the forward error correction function, wherein the redundancy bits are usable for an error control which is to be performed on the third stream of data packets. The third stream of data packets is then transmitted over the air interface.

The first stream of data packets might for example be intended by a sender, e.g., a base station, to be received by a first receiver, e.g., a first mobile terminal served by the base station, whereas the second stream of data packets is to be sent to a second receiver, e.g., a second mobile terminal served by the base station. Each of the first and second stream of data packets are not sent independently to the first and second mobile terminal, respectively. Instead, the first and second stream of data packets are multiplexed, whereby the multiplexed stream of data packets is generated. The multiplexed stream of data packets is then processed by a forward error correction function such that a receiver is able to detect and correct errors in the multiplexed stream of data packets which are due to for example a noisy transmission channel to the receiver. The processing of the multiplexed stream of data packets by the forward error correction function instead of processing the first and second stream of data packets independently from each other by the forward error correction function provides the advantage that forward error correction schemes, such as LDPC which operate with relatively long packet lengths can be employed without affecting the transmission quality, since the at least first and second stream of data packets, or more precisely data packets of the first and second stream of data packets can be packed into the relatively long packet lengths processed as an entity by such FEC schemes like LDPC.

In accordance with an embodiment of the invention, the method further comprises the steps of receiving the third stream of data packets over the air interface, processing the third stream of data packets by the forward error correction function and performing the error control on the third stream of data packets. In further steps, the third stream of data packets is de-multiplexed, wherein errors in the data have been corrected according to the error control performed before. The at least first and second streams of data packets are generated in the de-multiplexing step.

The embodiment described above relates to steps performed by the receiver of the third stream of data packets. The receiver, e.g., one of the first or second base stations mentioned above, is able to detect and correct errors due to the added redundancy bits within some bounds. It is therefore able to generate an undisturbed data packet from the multiplexed stream of data packets, wherein for example the disturbances in the data packet might have been caused by a noisy transmission channel between the sender and the receiver. The receiver is further able to demultiplex the third stream of data packets and thereby receive the first or second stream of data packets, which is intended to be received by the receiver. Each of the first and second streams of data packets might comprise data packets and thus data in an encrypted way, so that the receiver is not able to access the data which is not intended to be received by the receiver.

In accordance with an embodiment of the invention, the at least first and second streams of data packets are multiplexed by use of a CDMA (code division multiple access) scheme, a FDM (frequency division multiplexing) scheme, a TDM (time division multiplexing) scheme, or a combination thereof. The first and second stream of data packets can be multiplexed by use of any appropriate scheme, such as the schemes mentioned above, in order to generate the multiplexed stream of data packets.

In accordance with an embodiment of the invention, the third stream of data packets is modulated on a carrier signal which is transmitted over the air interface. The third stream of data packets is thus transmitted via the carrier signal.

In accordance with an embodiment of the invention, the at least first and second streams of data packets are encrypted before the at least first and second streams of data packets are multiplexed. The first and second stream of data packets can be encrypted by any cryptographic means that are employed to secure the communication within mobile communications networks or any other cryptographic mechanisms. For example, the sending station might employ a first public encryption key owned by the first receiver in order to encrypt the first stream of data packets. This ensures that only the first receiver is able to decrypt the received first stream of data packets. Hence, a second receiver which also receives the first stream of data packets is not able to decrypt the first stream of data packets and is therefore not able to access the stream of data packets.

In accordance with an embodiment of the invention, the at least first and second streams of data packets comprise compressed voice data. As mentioned before, the method in accordance with the invention is employable in order to transmit compressed voice data by use of a forward error correction function, such as LDPC. The first and second stream of data packets can therefore relate to a first and second voice channel, respectively, which are multiplexed into a multiplexed voice channel. This has the effect that the overall bit rate at the input of a module employing the forward error correction function, for example at the input of a LDPC coder, is increased with respect to performing the forward error correction function on each of the first and second streams of data packets independently. Consequently the end-to-end delay introduced by the forward error correction function is divided in proportion to the number of voice channels multiplexed together. Thus, as a result, each receiver receiving the multiplexed voice channels and generating the appropriate voice channel from the multiplexed voice channels is able to provide the voice to its user at least at a reduced delay rate.

In accordance with an embodiment of the invention, the forward error correction function is performed by a forward error correction module or any other component of the receiver and/or the sender.

In accordance with an embodiment of the invention, the forward error correction function corresponds to a low-density parity-check code (LDPC code).

According to a second aspect of the invention, there is provided a computer program product comprising computer executable instructions which are adapted to perform the method in accordance with the invention.

According to a third aspect of the invention, there is provided a terminal. The terminal has an air interface and means for multiplexing at least a first and second stream of data packets, wherein a multiplexed stream of data packets is generated. The terminal has further means for processing the multiplexed stream of data packets by a forward error correction function, wherein the forward error correction function adds redundancy bits to the multiplexed stream of data packets, wherein a third stream of data packets is generated. The redundancy bits are used for an error control to be performed on the third stream of data packets. The terminal furthermore comprises means for transmitting the third stream of data packets over the air interface.

In accordance with an embodiment of the invention, the terminal is a mobile terminal such as a mobile phone, a laptop, a PDA (personal digital assistant), or any other mobile device which can be connected to a wireless radio communication network.

In accordance with an embodiment of the invention, the terminal is a fixed terminal, such as a computer, e.g. a PC or a fixed line telephone that are adapted to be connected to a wireless or wire-based communication network.

According to a fourth aspect of the invention, there is provided a base station with an air interface and with means for multiplexing at least a first and second stream of data packets, wherein a multiplexed stream of data packets is generated. The base station has further means for processing the multiplexed stream of data packets by a forward error correction function, wherein the forward error correction function adds redundancy bits to the multiplexed stream of data packets, wherein a third stream of data packets is generated, wherein the redundancy bits are usable for an error control to be performed on the third stream of data packets. The base station has also means for transmitting the third stream of data packets over the air interface.

In accordance with an embodiment of the invention, the base station is adapted to perform the method in accordance with the invention.

In accordance with an embodiment of the invention, the base station is a base station of a radio communication network which is adapted to serve one or more terminals via the air interface.

According to a fifth aspect of the invention, there is provided a radio communication network comprising one or more base stations in accordance with the invention and/or one or more terminals in accordance with the invention.

According to a sixth aspect of the invention, there is provided a hardware component. The hardware component is adapted to perform the method in accordance with the invention.

In accordance with an embodiment of the invention, the hardware component comprises an application specific integrated circuit (ASIC) which is designed and adapted in order to perform the method in accordance with the invention.

In accordance with an embodiment of the invention, the hardware component is comprised in a base station of a radio communication network.

### Brief description of the drawings

In the following embodiments of the invention will be described in greater detail by making reference to the drawings in which:
- Figure 1: is a schematic block diagram communication network,
- Figure 2: is a flow diagram illustrating steps of a method in accordance with the invention,
- Figure 3: is a schematic diagram showing a sender and a receiver that perform steps according to an embodiment of the method in accordance with the invention.

### Detailed description

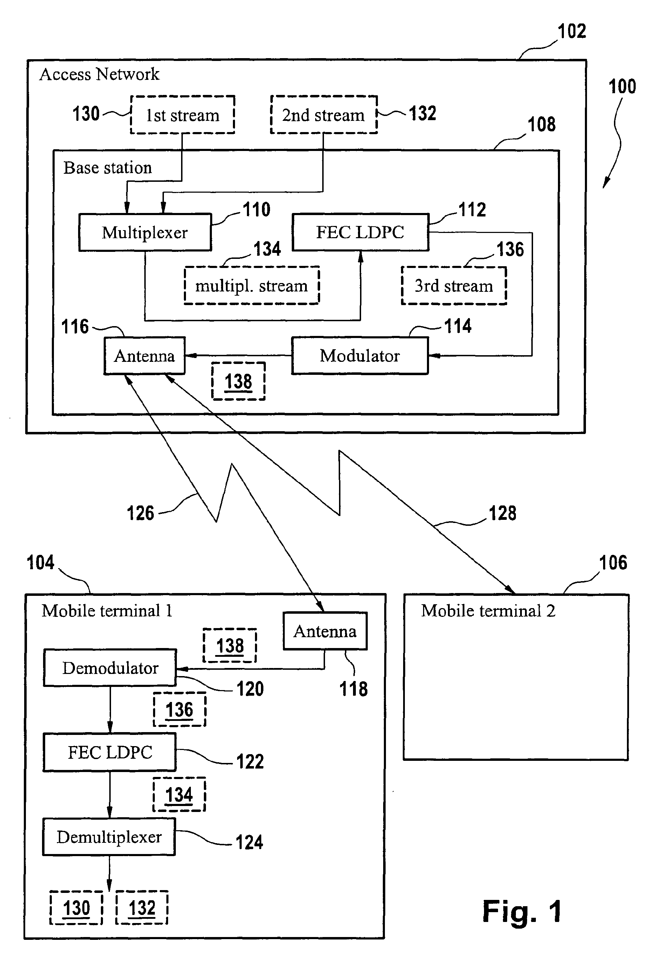

Fig. 1 is a schematic block diagram of a communication network 100. The communication network 100 comprises an access network 102, a first mobile terminal 104 and a second mobile terminal 106. The access network 102 comprises a base station 108.

The base station 108 comprises a multiplexer 110, a forward error correction module 112 which is adapted to perform an error correction on a received input by use of a LDPC (low-density parity-check code) scheme. The module 112 is in the following also referred to as FEC LDPC module 112. The base station 108 further comprises a modulator 114 and an antenna 116.

The first mobile terminal 104 comprises an antenna 118, a demodulator 120, a FEC LDPC module 122, and a de-multiplexer 124. The second mobile terminal 116 comprises corresponding components as shown in fig. 1 for mobile terminal 104. They are however not depicted in fig. 1 for simplicity reasons.

The mobile terminal 104 is connected to the base station 108 via a connection 126 which is established between the antennas 116 and 118. Similarly, a connection 128 is established between the second mobile terminal 106 and the base station 108.

A first stream of data packets 130 is received by the base station 108. The first stream of data packets 130 has for example been sent by another base station not shown in fig. 1 of the access network 102, so that the base station 108 has for example received the first stream of data packets 130 from a radio network controller connecting the base station 108 with the other base station. The base station 108 furthermore receives a second stream of data packets 132, e.g., from the core network linked with the access network (the core network is also not shown in fig. 1). The first stream of data packets 130 shall be sent to the first mobile terminal 104, whereas the second stream of data packets 132 shall be sent to the second mobile terminal 106. The first mobile terminal 104 is thus the destination of the first stream of data packets 130 whereas the second mobile terminal 106 is the destination of the second stream of data packets 132.

In operation, the base station 108 puts the first and second streams of data packets in the multiplexer 110, so that a multiplexed stream of data packets 134 is generated from multiplexing the first and second streams of data packets, for example by use of a frequency division multiplexing (FDM) scheme.

The multiplexed stream of data packets 134 is then inputted into the FEC LDPC module 112. The FEC LDPC module 112 performs a forward error correction according to the low-density parity-check code on the multiplexed stream of data packets 134 and therefore adds redundancy bits to the multiplexed stream of data packets, or more precisely, to each data packet of the multiplexed stream of data packets. Thereby, a third stream of data packets 136 is generated. The third stream of data packets 136 is then included into a modulator 114, whereby the third stream of data packets is modulated on a carrier signal. The modulator 114 thereby outputs a modulated carrier signal 138. The modulated carrier signal 138 is then transmitted over the air interfaces 126 and 128 to the first and second mobile terminals 104 and 106.

The first mobile terminal 104 receives the modulated carrier signal 138 via the antenna 118 and puts the modulated carrier signal into the demodulator 120, whereby the third stream of data packets 136 is generated. The third stream of data packets 136 is then inputted into the FEC LDPC module 122 whereby errors in the third stream of data packets are detected and corrected. Therefore any errors introduced into the third stream of data packets 136, for example due to a noisy transfer over the connection 126, are eliminated (within some bounds) and the third stream of data packets 136 is reconstructed. The FEC LDPC module 122 outputs the multiplexed stream of data packets 134. The multiplexed stream of data packets 134 is then inputted into a de-multiplexer 124 which outputs the first stream of data packets 130 and the second stream of data packets 132. The first stream of data packets 130 has been intended to be received by the first mobile terminal 104 which has therefore been achieved.

In order to ensure that the first mobile terminal 104 can only access the first stream of data packets 130 but not the second stream of data packets 132, each of the data packets might be encrypted by use of the public keys of the first and second mobile terminals 104, 106, respectively, so that the first mobile terminal 104 is only able to decipher the first stream of data packets 130.

The second mobile terminal 106 also receives the modulated carrier signal 138 and generates, as described for the first mobile terminal 104 before, the first and second data streams 130 and 132. The second stream of data packets 132 which has been intended to be sent to the second mobile terminal 106 has therefore arrived at the second mobile terminal 106.

The first and second mobile terminal 104 and 106 can also operate according to an embodiment of the invention in the way as described for the base station 108. Thus, the first mobile terminal 104 can for example also comprise a multiplexer such as multiplexer 110 and modulator such as modulator 114, which can be used to generate the multiplexed stream of data packets from the first, second and even more streams of data packets. The modulator can be used to modulate the multiplexed stream of data packets on which the FEC LDPC module 122 has performed an error correction. The modulated carrier signal is then transmitted to the base station 108. The employment of an embodiment of the method in accordance with the invention by the first and/or second mobile terminal 104, 106 is particularly advantageous when a direct transfer of data packets between two terminals is considered because each terminal might in this case want to transmit two or more streams of data packets that are to be multiplexed and further processed according to the method in accordance with the invention.

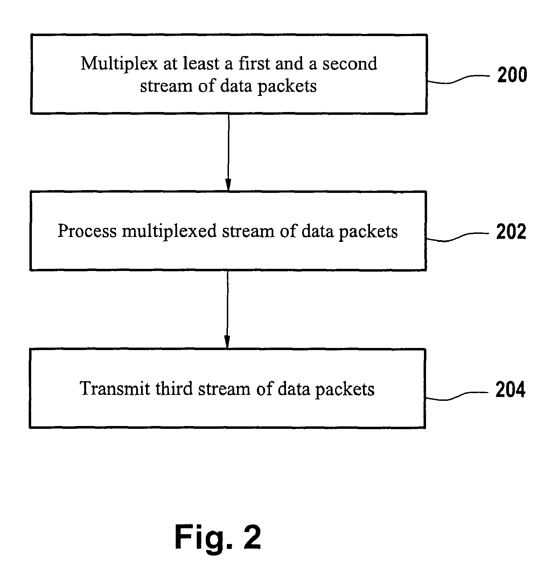

Fig. 2 is a flow diagram illustrating steps performed by the method in accordance with the invention. According to step 200 of the method in accordance with the invention, at least a first and a second stream of data packets are multiplexed, wherein a multiplexed stream of data packets is generated. In step 202, the multiplexed stream of data packets is processed by a forward error correction function, wherein the forward error correction function adds redundancy bits to the multiplexed stream of data packets, wherein a third stream of data packets is generated. The redundancy bits are used for an error control performed or to be performed in the third stream of data packets. The third stream of data packets is transmitted over the air interface in step 204.

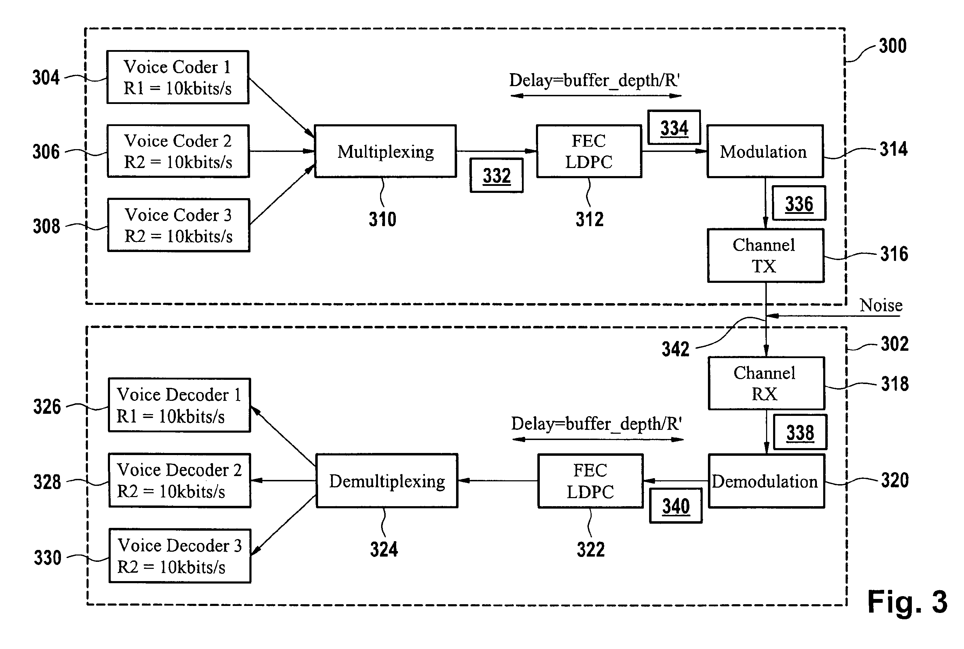

Fig. 3 is a schematic diagram showing a sender 300 and a receiver 302 that perform steps according to an embodiment of the method in accordance with the invention. The sender 300 comprises voice coders 304, 306 and 308. The sender has also a multiplexing component 310 and a forward error correction LDPC coder 312. The sender 300 has also a modulation component 314 and a radio transmitter (RT TX) 316. The receiver 302 has a radio receiver (RF RX) 318, a demodulation component 320, a FEC LDPC decoder 322 and a de-multiplexing component 324. The receiver 302 has further voice decoders 326, 328, and 330.

The voice coders 304-308 are employed to transfer voice into voice data packets. Each voice coder 304-308 works at a particular rate R1, R2, and R3, respectively for coding the voice into data packets, e.g. R1 = R2 = R3 = 10 kbits/s. The voice data outputted by the voice coders 304-308 are multiplexed by the multiplexing component 310, whereby multiplexed voice data 332 is generated. The multiplexed voice data 332 is then inputted into the FEC LDPC coder 312, where forward error correction is applied. The LDPC scheme implemented by the coder 312 processes packets with a relative long packet length. Hence, the FEC LDPC coder 312 buffers the received multiplexed voice data until a packet employed by the coder 312 is full. The delay D introduced due to the buffering is given by D = BD / (R1 + R2 + R3), wherein BD relates to the buffer depth (BD) employed by the coder 312.

If each voice data would be inputted into a FEC LDPC coder separately, the delay D would be given by, e.g., D=BD / R1 for the voice data coded by the voice coder 304. Hence, the delay is reduced when the multiplexed voice data is inputted into the FEC LDPC coder 312 which as a result positively affects the voice quality experienced by the receiver.

The FEC LDPC coder 312 outputs third voice data 334 which is inputted into a modulation component 314, whereby the third voice data 334 is modulated on a carrier signal. The modulated carrier signal 336 is then transferred via the radio transmitter 316 to the radio receiver 318 over a propagation channel 342. The propagation channel 342 is subject to, e.g. noise, fading, shadowing, which might cause errors in the transmitted signal.

The received modulated carrier signal 338 is passed from the radio receiver 318 to the demodulation component 320, where a fourth voice data 340 is generated. In an ideal case, the fourth voice data 340 corresponds to the third voice data 334. The fourth voice data 340 might however contain errors with respect to the third voice data 334, e.g., due to the unreliable transmission.

The fourth voice data 340 is fed into the FEC LDPC decoder 322, where error correction according to the LDPC scheme is applied. The delay D introduced by the FEC LDPC decoder is also given by D = BD /(R1 + R2 + R3), whereby the buffer depth BD relates to the buffer depth (BD) employed by the decoder 322.

The FEC LDPC coder 322 therefore outputs the multiplexed voice data 332 which is de-multiplexed by the de-multiplexing component 324. The de-multiplexing component 324 further forwards the de-multiplexed voice data 332 to the corresponding voice decoders 326-330.

### List of Reference Numerals

- 100: Communication network
- 102: Access network
- 104: Mobile terminal
- 106: Mobile terminal
- 108: Base station
- 110: Multiplexer
- 112: FEC LDPC module
- 114: Modulator
- 116: Antenna
- 118: Antenna
- 120: Demodulator
- 122: FEC LDPC module
- 124: De-multiplexer
- 126: Connection
- 128: Connection
- 130: First stream of data packets
- 132: Second stream of data packets
- 134: Multiplexed stream of data packets
- 136: Third stream of data packets
- 138: Module related carrier signal
- 300: Sender
- 302: Receiver
- 304: Voice coder
- 306: Voice coder
- 308: Voice coder
- 310: Multiplexing component
- 312: FEC LDPC coder
- 314: Modulation component
- 316: Radio transmitter
- 318: Radio receiver
- 320: Demodulation component
- 322: FEC LDPC component
- 324: De-multiplexing component
- 326: Voice decoder
- 328: Voice decoder
- 330: Voice decoder
- 332: Multiplexed voice data
- 334: Third voice data
- 336: Modulated carrier signal
- 338: Received modulated carrier signal
- 340: Fourth voice data
- 342: Propagation channel

## Claims

1. A method of transmitting data packets over an air interface (116), the method comprising:
- multiplexing at least a first and second stream of data packets (130, 132), wherein a multiplexed stream of data packets (134) is generated;
- processing the multiplexed stream of data packets by a forward error correction function (112), wherein the forward error correction function adds redundancy bits to the multiplexed stream of data packets, wherein a third stream of data packets is generated, and wherein the redundancy bits are usable for an error control to be performed on the third stream of data packets;
- transmitting the third stream of data packets (136) over the air interface.

2. The method of claim 1, further comprising:
- receiving the third stream of data packets over the air interface;
- processing the third stream of data packets (136) by the forward error correction function, wherein the error control is performed on the third stream of data packets;
- de-multiplexing the third stream of data packets, wherein the at least first and second streams of data packets are generated.

3. The method of claim 1, wherein the at least first and second streams of data packets (130, 132) are multiplexed by use of a code division multiplexing access (CDMA) scheme, a frequency division multiplexing (FDM) scheme, a time division multiplexing (TDM) scheme, or a combination thereof, or any other scheme used to multiplex at least two streams of data packets.

4. The method of claim 1, wherein each of the at least first and second streams of data packets (130, 132) is encrypted before the at least first and second streams of data packets are multiplexed.

5. The method of claim 1, wherein the at least first and second streams of data packets (130, 132) comprise compressed voice data.

6. A computer program product comprising computer executable instructions, the instructions being adapted to perform the method in accordance with any one of the preceding claims.

7. A hardware component comprising an application specific integrated circuit, the application specific circuit being adapted to perform the method in accordance with any one of the preceding claims 1 to 5.

8. A terminal (104, 106) comprising:
- an air interface (118);
- means for multiplexing at least a first and second stream of data packets (130, 132), wherein a multiplexed stream of data packets (134) is generated;
- means for processing the multiplexed stream of data packets by a forward error correction function, wherein the forward error correction function (122) adds redundancy bits to the multiplexed stream of data packets, wherein a third stream of data packets (136) is generated, wherein the redundancy bits are used for an error control performed on the third stream of data packets;
- means for transmitted the third stream of data packets over the air interface.

9. A base station (108) comprising:
- an air interface (116);
- means for multiplexing at least a first and second stream of data packets (130, 132), wherein a multiplexed stream of data packets (134) is generated;
- means for processing the multiplexed stream of data packets by a forward error correction function, wherein the forward error correction function adds redundancy bits to the multiplexed stream of data packets, wherein a third stream of data packets (136) is generated, wherein the redundancy bits are used for an error control performed on the third stream of data packets;
- means for transmitting the third stream of data packets over the air interface.

10. A radio communication network (100) comprising one or more base stations (108) according to claim 9 and/or one or more terminals (104, 106) according to claim 8.
